# EUROPÄISCHE PATENTANMELDUNG

(11) **EP 3 524 636 A1**
(43) Veröffentlichungstag der Anmeldung: **14.08.2019**
(21) Anmeldenummer: 19158664.3
(22) Anmeldetag: 24.03.2016
(51) Int. Cl.: C08K 3/22, C08K 3/38, C08K 3/04, C08K 5/00, C08K 5/01, C08L 23/16, C08L 9/00, C08L 23/08, C08L 31/04, C08K 3/016

(54) **FLAMMGESCHÜTZTE POLYMERE ZUSAMMENSETZUNG**

(30) Priorität: 25.03.2015 AT 502402015
(62) Teilanmeldung aus: 16719002.4
(71) Anmelder: Bategu Gummitechnologie GmbH, 1190 Wien (AT)
(72) Erfinder: Mestan, Gerhard, 1210 Wien (AT)
(74) Vertreter: Wildhack & Jellinek

(57) **Zusammenfassung**

Die Erfindung betrifft eine flammgeschützte, vulkanisierte polymere Zusammensetzung enthaltend als polymere Komponente zumindest ein halogenfreies olefinisches Elastomer der M-Gruppe mit gesättigter Hauptkette, mit einem Anteil von mehr als 50 phr bezogen auf die polymeren Bestandteile. Die Erfindung ist dadurch gekennzeichnet, dass zumindest ein oder eine Kombination von verschiedenen halogenfreien wasserabspaltenden Flammschutzmitteln mit einem Anteil von insgesamt 30 bis 130 phr enthalten ist, und dass der Anteil an Mineralöl-Weichmachern in der Zusammensetzung kleiner gleich 50 phr ist.

## Beschreibung

Die Erfindung betrifft eine flammgeschützte polymere Zusammensetzung gemäß dem Oberbegriff des Anspruchs 1.

Elastische Elemente, beispielsweise aus Gummi bzw. Kautschuk, weisen von sich aus keine flammhemmenden bzw. brandhemmenden Eigenschaften auf, wie sie in einigen Einsatzzwecken teilweise auf Basis von Normen bzw. gesetzlichen Bestimmungen gefordert werden. Bislang werden beispielsweise Naturkautschuk oder Chloropren-Kautschuk (CR) als Basispolymere für dynamische Anwendungen eingesetzt. Sie weisen zwar beste mechanische Werte und Verschleißeigenschaften auf, aber eben keine flammhemmenden bzw. brandhemmenden Eigenschaften, die die Anforderungen der EN 45 545 - 2 erfüllen können. Dies bezieht sich insbesondere auf Probleme bezüglich der Rauchgasdichte (NR, CR) und der Toxizität (CR).

Die Erzielung der Schwerentflammbarkeit, insbesondere nach der Norm EN 45545-2, mit den damit verbundenen hohen Anforderungen bezüglich Flammenausbreitung, optischer Rauchdichte, Rauchgastoxizität und Wärmefreisetzungsrate, erfordert zunächst ein besonderes Augenmerk bei der Auswahl der Polymere. Die strengen Anforderungen hinsichtlich Rauchdichte und Toxizität schließen beispielsweise die Anwendung halogenhaltiger Polymere, z.B. von Chloropren-Kautschuk (CR) oder von Elastomeren der R-Gruppe mit ungesättigter Hauptkette, z.B. Nitril-Kautschuke, z.B. HNBR, a priori aus. Olefinische Polymere der M-Gruppe mit einem geringem Widerstand gegenüber Rissentstehung und -wachstum bei statischer und dynamischer Beanspruchung und mangelhafter Beständigkeit gegenüber Schmierölen und Fetten sowie Vinylacetat-haltige thermoplastische Polymere werden bevorzugt eingesetzt, um die Anforderungen an Rauchgasdichte und Toxizität zu erfüllen.

Es ist weiters bekannt, Elastomere mit Flammschutzmitteln bzw. brandhemmenden Mitteln in großen Mengen zu versetzen, wobei jedoch durch die Beimengung derartiger Zusätze die Werkstoffeigenschaften üblicherweise stark beeinträchtigt werden, womit ein derartiges aus Gummi bzw. Kautschuk bestehendes Element, die für den Einsatz geforderten statischen und dynamischen Eigenschaften nicht mehr erfüllen kann.
Bei einer dynamischen Verwendung z.B. als Federelement oder Dämpfungselement oder einem ähnlichen, üblicherweise hochdynamisch belasteten Element, beispielsweise bei Fahrzeugen, können andererseits mit bekannten elastischen Elementen basierend auf NR und CR die geforderten brandschutztechnischen Bestimmungen nicht zufriedenstellend erfüllt werden.

Derzeit ergibt sich beispielsweise für Elastomerartikel im Schienenfahrzeugbereich das Problem, dass sowohl die EN 45545-2 HL3 (z.B. R9, R22/23) als auch die Anforderungen der DIN 5514 (Profil) bzw. der BN 918043 (Elastomere für technische Zwecke) nicht mit einem einzigen Werkstoff gleichermaßen zu erfüllen sind.

Um dies zu lösen, wurde teilweise versucht, Materialkombinationen vorzusehen und den geschützten elastischen Kern damit frei von Flammschutzmitteln zu halten. Derartige Verbundelemente sind beispielsweise in der DE 38 31 894 A1 oder der WO 2010/069842 beschrieben.

Aus dem Stand der Technik sind weiters polymere, Flammschutzmittel-enthaltende Mischungen aus Ethylenvinylacetat mit Ethylen-Propylen-Dien-Monomer-Kautschuk bekannt. In den meisten Fällen erfolgt die Vernetzung peroxidisch oder durch Bestrahlung. Derartige Mischungen werden vor allem bei der Ummantelung von Kabeln oder elektrischen Leitungen eingesetzt. So sind beispielsweise in der EP 2 343 334 A2 flammgeschützte Zusammensetzungen aus EVA, EPDM und LLDPE beschrieben, die ein durch Di-Cumylperoxid gebildetes, peroxidisches Vernetzungssystem aufweisen. Meist basieren diese Werkstoffe auf EVA mit geringen Zusätzen an EPDM/EPM oder PE.

Weiters sind auch zahlreiche Polymermischungen mit dynamisch vernetzten thermoplastischen Elastomeren (TPV bzw. TPE-V) bekannt. Hierbei handelt es sich um zweiphasige Systeme, bei denen in einer kontinuierlichen thermoplastischen Matrix fein dispergierte vernetzte Kautschukpartikel eingelagert sind. Thermoplastische Elastomere verhalten sich bei Raumtemperatur vergleichbar zu klassischen Elastomeren, sind jedoch unter Wärmezufuhr plastisch verformbar und weisen bei erhöhter Temperatur ein thermoplastisches Verhalten auf. Genau dies ist für den Einsatz als Dämpfungsbauteil z.B. für Schienenfahrzeuge, aber nicht gewünscht, denn dort ist das Beibehalten der elastischen Eigenschaften auch bei höheren Temperaturen notwendig. Thermoplastische Elastomere sind dementsprechend dafür nicht geeignet.

In der WO 2014/019008 sind weiters schwefelvernetzte Mischungen aus EPDM und EVA beschrieben, die mit sehr hohen Mengen an Flammschutzmitteln gefüllt werden können und dementsprechend gute Flammbeständigkeit aufweisen, aber aufgrund eines speziellen Schwefelvernetzungssystems dennoch ihre vorteilhaften mechanischen Eigenschaften beibehalten.

Oftmals wird auch versucht, die durch die hohen Anteile an Flammschutzmitteln bedingten verschlechterten mechanischen Eigenschaften, insbesondere hinsichtlich Härte und Steifigkeit, durch den Einsatz von Weichmachern zu korrigieren. Üblicherweise beinhalten derartige Elastomermischungen z.B. auf Basis von EPDM oder EPM hohe Anteile an Mineralöl-Weichmachern, insbesondere um die Verarbeitungseigenschaften (Fließfähigkeit) zu verbessern und mechanische Kennwerte, wie z.B. Härte, Modul einzustellen. Übliche Einsatzmengen können bei 50 bis 200 phr (parts per hundred rubber) bezogen auf das Polymer liegen.

Mineralöle sind Erdölprodukte und komplex zusammengesetzte Kohlenwasserstoffgemische und weisen paraffinische, naphthenische und aromatische Anteile auf. Für unpolare bzw. schwach polare olefinische Elastomere werden aus Polaritäts- und damit Verträglichkeitsgründen Mineralöle eingesetzt, deren Anteil aromatisch gebundener Kohlenstoffatome (C_{aromatisch}) nicht größer als 50 Gew- % bezogen auf 100 Gew-% Mineralöl sein sollte. Aus Gründen der Polarität können für solche Einsatzmengen also nur Mineralöle mit überwiegend paraffinischem oder naphthenischem Anteil eingesetzt werden.

Eine typische Rezeptur einer bekannten polymeren Zusammensetzung weist folgende Zusammensetzung auf:

| | |
|---|---|
| • EPDM | 100 phr |
| • Ruß | 20 phr |
| • Aluminiumtrihydrat (ATH) | 180 phr |
| • Zinkborat | 50 phr |
| • Weichmacher | 45 phr |
| • Vernetzungschemikalien: | 12 phr |
| • Verarbeitungshilfsmittel: | 5 phr |

Der Gehalt an wasserabspaltenden Flammschutzmitteln beträgt hier 230 phr. Derartige Mischungen können die Brandschutz-Anforderungen der EN 45545-2 (R22/23, R9) erfüllen, als nachteilig erweisen sich hier jedoch die, durch den hohen Gehalt an Flammschutzmitteln bedingten, mangelhaften mechanischen Eigenschaften:

| | |
|---|---|
| • Härte: | 64 Shore A |
| • Dichte: | 1,47g/cm³ |
| • Elastizität: | 31% |
| • Zugfestigkeit: | 4,2 MPa |
| • Reißdehnung | 560% |
| • Abrieb: | > 600 cm³ |

Es ist damit Aufgabe der Erfindung, diese Nachteile zu überwinden und ein flammgeschütztes polymeres Material zu schaffen, das außergewöhnliche brandschutztechnische Eigenschaften, insbesondere die Erfüllung der Norm EN 45545-2 HL3, in Kombination mit verbesserten mechanischen bzw. dynamischen Kennwerten aufweist.

Diese Aufgabe wird bei einer Zusammensetzung der eingangs erwähnten Art durch die kennzeichnenden Merkmale des Anspruchs 1 gelöst.
Erfindungsgemäß ist dabei vorgesehen, dass zumindest ein halogenfreies wasserabspaltendes Flammschutzmittel oder eine Kombination von verschiedenen halogenfreien wasserabspaltenden Flammschutzmitteln in einem Anteil von insgesamt 30 bis 130 phr enthalten ist, und dass der Anteil an Mineralöl-Weichmachern in der Zusammensetzung kleiner gleich 50 phr ist.

Wie eingangs beschrieben, ist es üblicherweise so, dass bei derartigen Elastomeren der Gehalt an Flammschutzmittel möglichst hoch gesetzt wird, um die Brandschutznormen erfüllen zu können. Da sich dadurch aber die mechanischen Eigenschaften oftmals unter die tolerierbaren Werte verschlechtern, wird versucht, durch den Einsatz größerer Mengen an Mineralöl-Weichmachern gegenzusteuern und die mechanischen Eigenschaften dadurch zu verbessern.
Es hat sich nun aber überraschend gezeigt, dass gerade diese Vorgangsweise, also der unbedachte Einsatz von Mineralöl-Weichmachern kontraproduktiv ist und erhebliche Nachteile beim Brandverhalten nach sich ziehen kann.
Dementsprechend war es unerwartet, dass bei der erfindungsgemäßen Zusammensetzung trotz der kontraintuitiven und beträchtlichen Senkung des Anteils an wasserabspaltenden Flammschutzmitteln auf unter 130 phr, wider Erwarten keine Verschlechterung der Brandschutzeigenschaften eintrat, sondern sowohl die Brandschutznorm EN 45545-2 als auch die geforderten mechanischen Eigenschaften DIN 5514 (Profil, z.B. Zugfestigkeit > 8,5 MPa, Abrieb < 300 mm³) bzw. der BN 918043 (Elastomere für technische Zwecke, Zugfestigkeit > 8 MPa GI und Abrieb maximal 300mm³ für N II) erfüllt werden konnten.
Als relevantes Merkmal hat sich in diesem Zusammenhang der Anteil der Zusätze an Mineralöl-Weichmachern herausgestellt. Dieser ist in der Mischung möglichst gering zu halten oder sogar auszuschließen. Ein Überschreiten des Mineralöl-Weichmacher-Gehalts über den Wert von 50 phr führt zu einer deutlichen Verschlechterung der Brandschutzeigenschaften, insbesondere zu einer Verschlechterung der Flammschutzeigenschaften bezüglich der Selbstverlöschung, und die Norm kann nicht mehr erfüllt werden. Neu ist dementsprechend auch die zugrunde liegende Erkenntnis, dass im vorliegenden Fall nicht nur die Menge an Flammschutzmitteln das Brandverhalten bestimmt, sondern das Brandverhalten in erster Linie auch durch die Reduktion bzw. den Verzicht auf Mineralölzusätze erreicht wird.
Gleichzeitig erreicht man durch die Reduktion der Flammschutzmittel eine Verbesserung der mechanischen Eigenschaften, was einhergeht mit verbesserten dynamischen Eigenschaften.
Der Anteil des olefinischen Elastomers der M-Gruppe mit gesättigter Hauptkette von mehr als 50 phr ist ebenfalls vorteilhaft für gute dynamische Eigenschaften.

Weitere vorteilhafte Ausgestaltungen und Weiterentwicklungen der Zusammensetzung ergeben sich durch die Merkmale der abhängigen Ansprüche:
Vorteilhafte dynamische Eigenschaften werden erzielt, wenn das olefinische Elastomer mit einem Anteil von größer gleich 70 phr enthalten ist oder mit einem Anteil von 100 phr als einzige polymere Komponente enthalten ist.

Um die Eigenschaften der Zusammensetzung und vor allem die Brandbeständigkeit weiter zu erhöhen, ist es vorteilhaft, wenn als, vorzugsweise einziger, Weichmacher zumindest ein Mineralöl-Weichmacher mit einem maximalen Anteil von kleiner gleich 20 phr, vorzugsweise kleiner gleich 10 phr, enthalten ist. Sehr vorteilhafte flammhemmende Eigenschaften werden erreicht, wenn die Zusammensetzung völlig frei von Mineralöl-Weichmacher ist.

Zur Erreichung guter Brandschutzeigenschaften unter möglichst geringer Beeinflussung der Materialeigenschaften hat es sich als vorteilhaft bewährt, dass als Flammschutzmittel Magnesiumhydroxid (MDH), Aluminiumhydroxid (ATH), Antimontrioxid, Nanoclays und/oder Zinkborat, vorzugsweise eine synergistisch wirkende Mischung aus zwei oder mehreren davon, zugesetzt sind. Insbesondere ist/sind das/die Flammschutzmittel dabei fest und pulverförmig oder kristallin.

Um eine gute Flammschutzwirkung (Selbstverlöschung) bei gleichzeitig verbesserten mechanischen Eigenschaften hervorzurufen, kann vorgesehen sein, dass feste wasserabspaltende Flammschutzmittel (z. B. ATH, MDH, Zinkborat) in einer Menge von 50 bis 110 phr, vorzugsweise von 60 bis 100 phr bezogen auf das Polymer, enthalten ist/sind, vorausgesetzt der Mineralölgehalt ist kleiner 50 phr. Die Reduzierung des Flammschutzgehaltes verbessert die mechanischen Parameter, vor allem die dynamischen und elastischen Eigenschaften der Zusammensetzung. Eine Selbstverlöschung im Brandfall wird erreicht.

Das olefinische Elastomer ist vorteilhafterweise ein Homopolymer oder ein Copolymer oder ein Terpolymer aus bzw. mit Dien-Monomereinheiten, insbesondere ein Terpolymer bestehend aus Ethylen, Propylen und einem dienhaltigen Termonomer, vorzugsweise mit einem Termonomer-Anteil von mindestens 0 Gew.-% bis 12 Gew.-% bezogen auf das olefinische Elastomer (gemäß ASTM D 6047). Auf diese Weise können auch die für eine Schwefelvernetzung notwendige Doppelbindungen bereitgestellt werden.

In diesem Zusammenhang ist es vorteilhaft, wenn das olefinische Elastomer ausgewählt ist aus der Gruppe bestehend aus Ethylen-Propylen-Dien-Kautschuk (EPDM) und Ethylen-Propylen-Kautschuk (EPM) und/oder dass die Zusammensetzung aus Ethylen-Propylen-Dien-Kautschuk (EPDM) und/oder Ethylen-Propylen-Kautschuk (EPM) als einzigen polymeren Komponenten besteht. Ethylen-Propylen-Dien-Monomer-Kautschuke (EPDM) weisen im Brandfall große Vorteile bezüglich ihrer geringen Rauchgasdichte und Toxizität auf. EPDM-Kautschuke können außerdem in einem breiten Bereich der Härte und der mechanischen Kennwerte eingestellt werden. Weiters bieten EPDM-Kautschuke Vorteile hinsichtlich der Witterungs-, UV-, Ozon- und Hitzebeständigkeit und vermögen als Schutzschicht die Alterung der zu schützenden, dynamisch belasteten Bauteile, z. B. aus Naturkautschuk, zu minimieren.
Die halogenfreien, olefinischen Kautschuke der M-Gruppe, z.B. EPM oder EPDM, mit besonders hohem Molekulargewicht können zudem mit Mineralölen seitens der Hersteller verstreckt sein, um eine Verbesserung des Verarbeitungsverhaltens zu erzielen.
Vorzugsweise sind darin nicht-konjugierte Dien-Monomereinheiten enthalten, ausgewählt aus der Gruppe von 1,3-Butadien, 2-Methyl-1,3-butadien (Isopren), 2,3-Dimethyl-1,3-butadien, 1,3-Pentadien, 1,3-Cyclopentadien, Dicyclopentadien, 2-Methyl-1,3-pentadien, 1,3-Hexadien, 1,4-Hexadien, 1,4-Cyclohexadien, Tetrahydroinden, Methyl Tetrahydroinden, Ethylidennorbornen bzw. 5-Ethyliden-2-norbornen (ENB), 5-Methylen-2-norbornen (MNB), 1,6 Octadien, 5-Methyl-1,4-hexadien, 3,7-dimethyl-1,6-octadien, 5-isoPropyliden-2-norbornen, 5-Vinyl-2-norbornen (VNB).
Besonders vorteilhaft ist es dabei, wenn der Ethylen-Propylen-Dien-Monomer-Kautschuk (EPDM) ein Terpolymer aus Ethylen, Propylen und 5-Ethyliden-2-norbornen (ENB) oder Dicyclopentadien (DCPD) ist, vorzugsweise mit einem Termonomer-Anteil von mindestens 2 bis 12 Gew.-% bezogen auf das Terpolymer (gemäß ASTM D 6047). Aufgrund des vergleichsweise geringen Doppelbindungsgehaltes von EPDM gegenüber anderen Dienkautschuken ist zur Erzielung einer wirtschaftlich sinnvollen Vulkanisationsgeschwindigkeit eine höhere Beschleunigermenge einzusetzen. Die Löslichkeit von EPDM für Schwefel und die meist polaren Beschleuniger bzw. Beschleunigerreste ist gering. Deshalb wird hierfür meist eine Kombination mehrerer Beschleuniger verwendet, um ein Ausblühen zu vermeiden.
Die Vernetzung mit Schwefel und Schwefelspendern setzt die Anwesenheit von Doppelbindungen der Terkomponente voraus. Über das Mengenverhältnis von Schwefel, Schwefelspendern und Beschleunigern und die Art der Beschleuniger werden die Länge der Schwefelnetzbrücken und die Netzwerkdichte bestimmt.
Häufig eingesetzte Beschleuniger sind z.B. Sulfenamide, z.B. N-Cyclohexyl-2-benzothiazylsulfenamid (CBS), Thiazole, z.B. 2-Mercaptobenzothiazol (MBT), Dithiocarbamate, z.B. Zinkdibenzyldithiocarbamat (ZBEC), Guanidine, z.B. Diphenylguanidin (DPG) oder Thiophosphate. Als Schwefelspender kommen z.B. Thiurame, Caprolactamdisulfid oder Phosphorylpolysulfid zum Einsatz.
Olefinische Elastomer-Copolymere, wie EPM, werden üblicherweise mit Peroxiden vernetzt. Typische Peroxide sind beispielsweise Dicumylperoxid, Di-(2-tert.-butyl-peroxyisopropyl)-benzen und 2,5-Dimethyl-2,5-di-(ter.-butylperoxy)-hexan, 1,1-di(tert-butylperoxy)-3,3,5-trimethylcyclohexane und n-butyl-4,4-di(t-butylperoxy)valerate.

Gemäß einer vorteilhaften Ausführungsvariante ist vorgesehen, dass in der Zusammensetzung neben dem Elastomer der M-Gruppe zumindest eine weitere polymere Komponente enthalten ist, insbesondere ein weiteres, anderes Elastomer, z.B. ein Elastomer der R-Gruppe oder der Q-Gruppe (Silikon), oder ein thermoplastisches Polymer. Vorteilhafterweise liegen die polymeren Komponenten der Zusammensetzung dabei als einphasige homogene Polymermischung bzw. Blend vor.

Gemäß einer weiteren vorteilhaften Ausführungsvariante ist vorgesehen, dass als weitere polymere Komponente ein Vinylacetat-haltiges thermoplastisches Polymer enthalten ist, insbesondere ein Homopolymer, Copolymer oder Terpolymer des Vinylacetats und vorzugsweise ausgewählt aus der Gruppe von Polyvinylacetat (PVAc) oder Ethylenvinylacetat (EVA).
Eine besonders geringe Rauchgasdichte bei gleichzeitig guten chemischen Eigenschaften wird erhalten, wenn das Vinylacetat-haltige Polymer einen Vinylacetat-Anteil von 40 bis 75 Gew.-%, aufweist (LP Testing instruction No. 015, Lanxess).

Ethylenvinylacetat wird meist im Kabelbereich eingesetzt. Die polare Vinylacetatgruppe verbessert die Flammwidrigkeit und gleichzeitig die Ölbeständigkeit. Die Rauchgasdichte ist gering und das Rauchgas weist keine Toxizität auf. Ethylenvinylacetat weist gleichzeitig eine hervorragende Witterungs-, UV-, Ozon - und Hitzebeständigkeit auf.
In diesem Zusammenhang ist es vorteilhaft, wenn das Vinylacetat-haltige Polymer eine Schmelztemperatur bzw. einen Beginn des Schmelzbereichs von weniger als 150 °C, vorzugsweise weniger als 100 °C, aufweist sowie gegebenenfalls eine bei typischen Kautschukverarbeitungstemperaturen geringe Viskosität. Auf diese Weise lässt sich eine gute Mischung erzielen und gleichzeitig die Vulkanisation vollständig vermeiden.

Eine vorteilhafte Zusammensetzung ist dadurch gekennzeichnet, dass EPM oder EPDM mit 50 bis 100 phr, insbesondere 70 bis 100 phr, vorzugsweise 80 bis 100 phr, dass das Vinylacetat-haltige Polymer in einer Menge von 0 bis 50 phr, insbesondere 0 bis 30 phr, vorzugsweise 0 bis 20 phr jeweils bezogen auf das Gesamtgewicht der Polymere, enthalten ist, wobei sich die Angaben in phr jeweils auf das Verhältnis der reinen polymeren Komponenten zueinander bzw. auf die Menge der Polymere EVA+EPDM (=100 phr) ohne Füllstoffe, Additive, Flammschutzmittel beziehen. Auf diese Weise wird eine innige Mischung der polymeren Bestandteile und ein nahezu einphasiges System erhalten.

Vinylacetat-haltige Polymere ohne Doppelbindungen in der Hauptkette und ohne doppelbindungshaltige Monomere werden überwiegend mit Peroxiden vernetzt.
Werden Vinylacetat-haltige Polymere gemeinsam mit EPDM eingesetzt, kann es auch gewünscht sein, dass durch Schwefelvernetzung nur das EPDM ein kontinuierliches Netzwerk ausbildet und das Vinylacetat-haltige Polymer unvernetzt vorliegt.
Zur Weichmachung von Vinylacetat-haltigen Polymeren werden oft paraffinische Weichmacher eingesetzt. Synthetische Weichmacher wie Adiapate oder Sebazate werden für eine verbesserte Tieftemperaturflexibilität verwendet und Phosphorsäurester werden beispielsweise für eine Verbesserung der Flammschutzwirkung eingesetzt.

Besonders vorteilhafte Zusammensetzungen bezüglich ihrer mechanischen und brandhemmenden Eigenschaften bestehen abschließend aus den folgenden polymeren Komponenten:
- Ethylen-Propylen-Dien-Kautschuk (EPDM) oder
- Ethylen-Propylen-Kautschuk (EPM) oder
- Ethylen-Propylen-Dien-Kautschuk (EPDM) und Ethylenvinylacetat (EVA) als homogene Polymermischung, oder
- Ethylen-Propylen-Kautschuk (EPM) und Ethylenvinylacetat (EVA) als homogene Polymermischung, oder
- Ethylen-Propylen-Dien-Kautschuk (EPDM) und Polyvinylacetat (PVAc) als homogene Polymermischung, oder
- Ethylen-Propylen-Kautschuk (EPM) und Polyvinylacetat (PVAc) als homogene Polymermischung.

Zur Erzielung weiterer gewünschter bzw. geforderter Eigenschaften der flammhemmenden polymeren Zusammensetzung wird darüber hinaus vorgeschlagen, dass dem Werkstoff weitere Zusätze, wie beispielsweise Füll- bzw. Farbstoffe, Russ, Verarbeitungshilfsmittel, Alterungsschutzmittel oder dgl. und Vernetzungsmittel zugesetzt sind. Bei der Verwendung von Flammschutz-Weichmachern finden Phosphorsäureester ihre Anwendung, die aufgrund ihrer Polarität nur in beschränktem Umfang mit unpolaren Kautschuken verträglich sind. Eine besonders vorteilhafte qualitative und quantitative Zusammensetzung ergibt sich wie folgt:
- Ethylen-Propylen-Dien-Kautschuk (EPDM) oder Ethylen-Propylen-Kautschuk (EPM): 70 - 100 phr,
- Vinylacetat-haltiges Polymer, insbesondere Ethylenvinylacetat (EVA): 0 - 30 phr,
- Mineralöl-Weichmacher: 0 - 10 phr,
- Flammschutzmittel, insbesondere Aluminiumhydroxid (ATH): 60 bis 100 phr,
- Ruß variabel in Abhängigkeit von der Härte: 0 - 80 phr,
- Rest Hilfsstoffe, Additive etc.

Wenn bzw. dadurch dass vorgesehen ist, dass die polymere Komponente bzw. die polymeren Komponenten der Zusammensetzung, also das Elastomer der M-Gruppe und/oder die weiteren polymeren Komponenten miteinander, einphasig und homogen, insbesondere ohne makroskopisch und lichtmikroskopisch sichtbare Phasentrennung, ist/sind und/oder eine im Wesentlichen, insbesondere sowohl makroskopisch als auch lichtmikroskopisch, einphasige und homogene Mischung bilden, insbesondere ohne mit dem freien Auge und/oder lichtmikroskopisch sichtbare Phasentrennung, ergeben sich besonders vorteilhafte mechanische Eigenschaften des Polymers, insbesondere hinsichtlich des elastisch-dynamischen Charakters. Darunter wird hier verstanden, dass die Mischung vorteilhafterweise so einphasig ist, dass in der Mischung und/oder in der finalen Zusammensetzung keine Elastomerpartikel mit einem mittleren Teilchendurchmesser von mehr als 0,5 µm, insbesondere von mehr als 0,1 µm, vorzugsweise mehr als 0,01 µm, und/oder keine Kautschukdomänen mit einem mittleren Durchmesser von mehr als 0,5 µm, insbesondere von mehr als 0,1 µm, vorzugsweise mehr als 0,01 µm, vorliegen. Insbesondere liegen gar keine erkennbaren oder detektierbaren Polymerpartikel oder Kautschukdomänen vor. Die Zusammensetzung, die polymere Komponente und/oder die Polymermischung ist also frei von dispergierten Elastomer-Partikeln oder Kautschuk-Domänen. Es liegt ein vollständig interpenetrierendes, chemisch vernetztes Netzwerk der einzelnen polymeren Komponenten vor.
In diesem Zusammenhang ist es besonders vorteilhaft, wenn bzw. dass die vulkanisierte Polymermischung ausschließlich elastomere und keine thermoplastischen Eigenschaften aufweist bzw. wenn bzw. dass die vulkanisierte Polymermischung bzw. die Zusammensetzung sowohl im Temperaturbereich der Anwendung als auch bis hin zu erhöhten Temperaturen, kurzfristig auch von 150 bis 200 °C, insbesondere überwiegend, elastomere Eigenschaften besitzt. Darin liegt auch ein wesentlicher Unterschied zu thermoplastischen Elastomeren und zu vernetzten thermoplastischen Elastomeren (TPE-V):
Durch dynamische Vulkanisation hergestellte vernetzte, thermoplastische Elastomere (TPE-V) besitzen im Anwendungsbereich bei geringeren Temperaturen, z.B. bei Raumtemperatur, weitgehend elastomere Eigenschaften und verhalten sich in diesem Bereich vergleichbar wie klassische Elastomere. Im Verarbeitungsbereich bei erhöhter Temperatur haben sie jedoch überwiegend thermoplastische Eigenschaften, sind dementsprechend fließfähig und plastisch verformbar bzw. warmumformbar und haben einen charakteristischen Schmelzpunkt bzw. Schmelzbereich bzw. Erweichungsbereich. Deren Eigenschaften sind hier durch die thermoplastische, unvernetzte, beispielsweise Polypropylen- oder Vinylacetat-, Polymermatrix bestimmt. Die darin eingebetteten, in-sich vernetzten Elastomer-Partikel bewirken gewisse elastische Eigenschaften, haben aber keinen wesentlichen Einfluss auf die Warmumformbarkeit und die Fließfähigkeit.
Die erfindungsgemäßen Zusammensetzungen besitzen hingegen nach der Vulkanisation über das gesamte relevante Temperaturspektrum hinweg, sowohl im Anwendungsbereich als auch im erhöhten Temperaturbereich, nahezu ausschließlich elastomere bzw. gummielastische Eigenschaften. Bei Temperaturerhöhung wird der Körper zwar weicher, wird jedoch niemals fließfähig, besitzt also keinen Schmelzpunkt oder -bereich. Die vulkanisierte Polymermischung bzw. die Zusammensetzung weist dementsprechend im Temperaturbereich bis 200 °C auch keinen Schmelzpeak, gemessen mit dynamischer Differenzkalorimetrie, auf. Auch ist nach erfolgter Vulkanisation keine Warmumformung und kein zweiter Formgebungsschritt möglich.
Thermoplastische Elastomere sind deshalb auch wesentlich weniger thermisch und dynamisch belastbar als die vorteilhaften erfindungsgemäßen Zusammensetzungen und neigen bei erhöhten Temperaturen zum Kriechen.

Eine vorteilhafte vulkanisierte Polymermischung bzw. die Zusammensetzung weist weiters in einem Temperaturbereich von Raumtemperatur bis ca. 200°C einen Verlustfaktor (Verhältnis von Verlust- zu Speichermodul bei dynamischer Scherbeanspruchung) von tan δ < 0,3, gemessen gemäß ISO 4664 "Elastomere oder thermoplastische Elastomere - Bestimmung der dynamischen Eigenschaften", auf. Dies zeigt, dass in einem Temperaturbereich, in dem TPE-Vs typischerweise verarbeitet werden, die elastischen Eigenschaften der erfindungsgemäßen Zusammensetzung im Vergleich zu den viskosen Eigenschaften überwiegen und damit keine weitere Formgebung mehr möglich ist.
Jedenfalls ist es also vorteilhaft, dass die Zusammensetzung nicht als thermoplastisches Elastomer (TPE), insbesondere nicht als thermoplastisches Elastomer auf Olefinbasis (TPE-O) oder als vernetztes thermoplastisches Elastomer auf Olefinbasis (TPE-V) ausgebildet ist.

Eine besonders vorteilhafte erfindungsgemäße Zusammensetzung wird hergestellt bzw. ist erhältlich durch Mischen der polymeren Komponente oder der polymeren Komponenten zu einem homogenen Blend und insbesondere nachfolgender Einarbeitung der Vernetzungsmittel, der Flammschutzmittel und gegebenenfalls weiterer Additive und/oder Hilfsstoffe und zwar unter strenger Vermeidung jeglicher Vernetzung bzw. Vulkanisation, vorzugsweise bei einer Temperatur von maximal 110 °C. Erst danach erfolgt ein Formgebungsschritt und die Vulkanisation, insbesondere bei erhöhter Temperatur und gegebenenfalls unter Druck. Die Vulkanisation erfolgt nicht unter Scherbeanspruchung, also nicht während des intensiven Mischens, wie bei der dynamischen Vulkanisation.
Die Vulkanisationstemperatur liegt vorteilhafterweise, insbesondere bei EPDM/EVA, bei einer Temperatur von unter 240°C, vorzugsweise in einem Temperaturbereich von 130 bis 190 °C. Hierdurch besteht ein weiterer Unterschied zu vernetzten thermoplastischen Elastomeren, bei denen die Vernetzung mittels dynamischer Vulkanisation bereits während des Mischens bei höherer Temperatur und unter starker Scherbeanspruchung stattfindet. Im Unterschied dazu wird bei der erfindungsgemäßen Zusammensetzung eine Vulkanisation bereits während der Mischung vermieden und die Vernetzung erfolgt erst am Ende, insbesondere nach der Formgebung, bei erhöhter Temperatur, jedoch nicht unter Scherbeanspruchung. Auf diese Weise werden die kautschuktypischen Eigenschaften der Zusammensetzung auch bei hohem Flammschutzmittelgehalt positiv beeinflusst.
Die sich so vorteilhaft ergebende Zusammensetzung ist somit erhältlich durch "statische" Vulkanisation, insbesondere nach erfolgter Formgebung. Unter dem Begriff der statischen Vulkanisation wird im vorliegenden Fall eine Vulkanisation unter Vermeidung jeglicher Scherbeanspruchung bzw. unter Vermeidung von dynamischer Vulkanisation verstanden.

Die erfindungsgemäße Zusammensetzung weist vorteilhafterweise die folgenden Kennwerte auf, nämlich
- eine Härte von 40 bis 90 Shore A, vorzugsweise 55 bis 85, Shore A (DIN ISO 7619-1) und/oder
- eine Zugfestigkeit > 5 MPa, vorzugsweise > 7 MPa (DIN 53504) und/oder
- einen Weiterreißwiderstand von > 7 N/mm, vorzugsweise > 10 N/mm (DIN ISO 34-1 B) und/oder
- einen Abrieb < 400 mm³, vorzugsweise < 300 mm³ (DIN ISO 4669) und/oder
- eine Dichte < 1,4 g/cm³, vorzugsweise < 1,3 g/cm³ (DIN ISO 1183 -1) und/oder
- einen MARHE-Wert (ISO 5660-1) < 90 kW/m², insbesondere < 60 kW/m² und/oder
- erfüllt die Normen EN 45545-2 HL 3 R9/R22/23.
Daraus ist ersichtlich, dass die für die dynamisch-elastischen Eigenschaften wesentlichen Kennwerte erhalten bleiben und erfüllt werden und dass die mechanischen Kennwerte wesentlicher höher liegen als für die heutigen Standard-Flammschutzmischungen nach EN 45545-2.

Zur Verbesserung der Anforderungen hinsichtlich Rauchdichte und Toxizität ist es vorteilhaft, wenn sämtliche polymere Komponenten, insbesondere die gesamte Zusammensetzung, halogenfrei sind/ist.

Erfindungsgemäß wird in diesem Zusammenhang auch ein Verfahren zur Herstellung einer vorteilhaften erfindungsgemäßen Zusammensetzung vorgeschlagen, wobei zuerst die polymeren Komponenten, das/die Vernetzungsmittel, das/die Flammschutzmittel und gegebenenfalls weitere Additive und Hilfsstoffe unter Vermeidung einer Vernetzung und/oder Vulkanisation zu einem homogenen Blend gemischt werden, und dann daran anschließend zumindest ein Schritt der Formgebung, beispielsweise durch Spritzen (IM) erfolgt. Erst danach, frühestens während oder am Ende der Formgebung, insbesondere nach vollständig abgeschlossener Formgebung, wird die Vulkanisation durchgeführt und zwar als statische, nicht-dynamische Vulkanisation unter Vermeidung von Scherspannung.
Besonders vorteilhaft zur Vermeidung einer verfrühten Vulkanisation ist es in diesem Zusammenhang, wenn der Schritt der Mischungserstellung vor der Formgebung unterhalb einer kritischen Temperatur und innerhalb einer kritischen Zeit, insbesondere bei einer Temperatur von maximal 125 °C, vorzugsweise im Bereich von 50 °C bis maximal 110 °C, durchgeführt wird. Der Blend bzw. die polymeren Komponenten liegen während der Mischungserstellung vorteilhafterweise in einem erweichten Zustand vor.
Eine weitere vorteilhafte Verfahrensführung, ebenfalls zur Vermeidung einer zu frühen Vernetzung bzw. Vulkanisation sieht vor, dass auch die Formgebung unterhalb einer kritischen Temperatur und innerhalb einer kritischen Zeit durchgeführt wird, insbesondere bei einer Temperatur von maximal 130 °C, insbesondere im Bereich von 70 °C bis 100 °C, erfolgt.
Die eigentliche Vulkanisation erfolgt dann vorteilhafterweise bei einer Temperatur von maximal 240 °C, insbesondere im Bereich von 160 °C bis 180 °C. Vorteilhafterweise erfolgt die Vernetzung bei einer im Vergleich zur Mischung und/oder Formgebung höheren Temperatur, insbesondere auch bei einem Druck von 100 bis 200 bar, gegebenenfalls aber auch drucklos.
Durch diese Verfahrensschritte bzw. Verfahrensführung ergibt sich bzw. erhält man eine vorteilhafte Zusammensetzung, die die gewünschten Merkmale aufweist.

Im Vergleich zu erfindungsgemäßen Verfahren wird bei der bekannten "dynamischen Vulkanisation" eine derartige Polymermischung unter hoher Scherbeanspruchung gemischt und dabei gleichzeitig vulkanisiert, also noch vor der Formgebung. Auf diese Weise bilden sich kleine Tröpfchen aus dem ungesättigten Elastomer aus, in denen die Vernetzung stattfindet. Die intensive Bearbeitung unter hoher Scherbeanspruchung führt dabei zu einer dauernden Isolierung dieser Tröpfchen und bewirkt, dass sich zwischen den einzelnen Elastomertröpfchen keine Verbindungen bzw. Schwefelbrücken aufbauen. Es bildet sich auf diese Weise zum Beispiel eine einheitliche, thermoplastische Matrix aus Vinylacetat-haltigem Polymer, z.B. EVA, in das isolierte und in dieser thermoplastischen Matrix dispergierte Inselchen aus dem Elastomer, z.B. EPDM, vorliegen. Zwischen den einzelnen separaten Elastomer-Partikeln bestehen keinerlei Verbindungen. Damit gibt es auch keine Netzwerk, das sich durch die gesamte Matrix des so erhaltenen Mischkörpers durchziehen und diesen Körper vollständig durchsetzen würde, im Gegenteil, die Vernetzung ist ausschließlich auf die jeweiligen Elastomerpartikel beschränkt.
Im Unterschied dazu bilden sich durch das vorteilhafte erfindungsgemäße Verfahren gerade keine isolierten, in sich vernetzten Elastomerpartikel aus, sondern es liegt ein interpenetrierendes Gemenge aus den Ketten von Vinylacetat-haltigem Polymer sowie den Elastomerketten vor. Die polymeren Komponenten liegen als chemisch weitmaschig vernetzte Raumnetzmoleküle vor, wobei die Vernetzungen ohne Zersetzung des Materials nicht gelöst werden können. Die Polymermischung ist frei von darin dispergierten, vulkanisierten Elastomer-Partikeln, insbesondere frei von Elastomer-Partikeln oder Kautschuk-Domänen mit einem mittleren (Teilchen-) Durchmesser von mehr als 0,5 µm, insbesondere von mehr als 0,1 µm, vorzugsweise mehr als 0,01 µm.

Die Erfindung bezieht sich weiters auf einen flammgeschützten Artikel. Dieser Artikel kann entweder ausschließlich aus der erfindungsgemäßen Zusammensetzung bestehen, beispielsweise als Formteil. Alternativ kann ein solcher Artikel auch nur teilweise diese Zusammensetzung umfassen, beispielsweise in Form einer Beschichtung auf einem Grundkörper, beispielsweise auf einem Gewebe.

Ebenfalls betrifft die Erfindung ein elastisches Verbundelement, geeignet zur Schwingungs- und Vibrationsdämpfung und Federung, mit einem Grundkörper, der zumindest teilweise oder abschnittsweise, an seiner äußeren Oberfläche, gegebenenfalls an seiner gesamten äußeren Oberfläche, mit zumindest einer Beschichtung aus der erfindungsgemäßen Zusammensetzung versehen ist. Im Falle einer Materialkombination ist vorteilhafterweise vorgesehen, dass der Grundkörper zum überwiegenden Teil aus Gummi bzw. Kautschuk, beispielsweise aus Polybutadienkautschuk, Styrolbutadienkautschuk, Acrylilnitrilkautschuk, Ethylen-Propylen-Dien-Kautschuk, Moosgummi oder Mischungen hievon, vorzugsweise aus Naturkautschuk, gebildet ist. Die geforderten elastischen bzw. dynamischen Eigenschaften des Grundkörpers des elastischen Elements werden darüber hinaus bevorzugt dadurch verstärkt bzw. unterstützt, dass in an sich bekannter Weise dem Grundkörper zusätzlich Füll- bzw. Verstärkerstoffe, Weichmacher, Vulkanisationsbeschleuniger, Vernetzungsmittel, Alterungsschutzmittel oder dgl. zugesetzt sind. Gemäß einer bevorzugten Weiterentwicklung ist vorgesehen, dass die Beschichtung fest und untrennbar mit dem Grundkörper verbunden ist, wobei die Beschichtung auf den Grundkörper vorzugsweise durch Konfektion, Extrusion, Pressen, Spritzen und nachfolgende Co-Extrusion aufgebracht ist. Durch die genannten Verfahren lässt sich in einfacher und zuverlässiger Weise das aus dem Grundkörper und der flammhemmenden bzw. brandhemmenden Beschichtung bestehende elastische Verbundelement unter Herstellung eines entsprechend sicheren Verbunds zwischen dem Grundkörper und der Beschichtung bereitstellen. Erfindungsgemäß kann weiters vorgesehen sein, dass der Grundkörper mit einer Armierung, beispielsweise Fasern, insbesondere Glasfasern, Kunststofffasern, CFK-Fasern, GFK-Fasern, einem Stoff bzw. Gewebe oder dgl. versehen ist.

Die Erfindung betrifft weiters die vorteilhafte Verwendung des Werkstoffs, des Artikels oder des elastischen Verbundelements als Federelement, Dämpfungselement, Dichtung, Schlauch, Matte, Formteil, Schutzbekleidung etc. oder als Bestandteil hiervon. Der Artikel kann vorteilhafterweise auch als, insbesondere als Endlosprofil ausgebildetes, Elastomerprofil, insbesondere für Fenster bzw. als Dichtung zwischen Rahmen und Glas, eingesetzt werden.

Besonders vorteilhaft kann eine flammgeschützte, vulkanisierte polymere Zusammensetzung sein, enthaltend als polymere Komponente zumindest ein halogenfreies olefinisches Elastomer der M-Gruppe mit gesättigter Hauptkette mit einem Anteil von mehr als 70 phr bezogen auf die polymeren Bestandteile, wobei der Anteil an Mineralöl-Weichmachern in der Zusammensetzung kleiner gleich 50 phr ist, und wobei die polymere Komponente bzw. die polymeren Komponenten der Zusammensetzung einphasig und homogen ist/sind, wobei zumindest ein oder eine Kombination von verschiedenen halogenfreien wasserabspaltenden Metallhydraten als Flammschutzmitteln mit einem Anteil von insgesamt 60 bis 100 phr enthalten ist, wobei eine durch ein Schwefel- bzw. schwefelhaltiges Vernetzungssystem vulkanisierte Matrix ausgebildet ist, wobei sich das Vernetzungssystem über die gesamte Matrix erstreckt und diese vollständig durchsetzt, und wobei die gesamte Zusammensetzung halogenfrei ist.

### Beispiele für die erfindungsgemäße Zusammensetzung:

### Beispiel 1:

**EPDM-Mischung ohne Vinylacetat-haltiges Polymer**

| | |
|---|---|
| Vernetzung: | Schwefel |
| Härte: | ca. 50 - 80 Shore A |

**Rezeptangaben in phr**

| Mischungsnummer | 1.0 | 1.1 | 1.2 | 1.3 | 1.4 | 1.5 | 1.6 | 1.7 |
|---|---|---|---|---|---|---|---|---|
| Härte, Shore A | 56 | 52 | 55 | 58 | 60 | 63 | 72 | 80 |
| EPDM (Ethylen: 55 Gew-%, ENB: 6,5 Gew-%) | 100 | 100 | 100 | 100 | 100 | 100 | 100 | 100 |
| Paraffinisches Mineralöl mit C_{aromatisch} :2% | 55 | 50 | 40 | 25 | 18 | 12 | 5 | 0 |
| Ruß Durex O/35 (Iodine Absorption Number: 30 mg/g; ASTM D 1510) | 15 | 15 | 15 | 15 | 27 | 40 | 50 | 60 |
| Al(OH)₃ mit d₅₀=1 µm | 160 | 80 | 70 | 60 | 60 | 60 | 60 | 60 |
| Zinkborat d₅₀= 2,1 µm | 10 | | | | | | | |
| Zinkoxid, BET = 4,5m²/g | 5 | 5 | 5 | 5 | 5 | 5 | 5 | 5 |
| Mahlschwefel | 1,5 | 1,5 | 1,5 | 1,5 | 1,5 | 1,5 | 1,5 | 1,5 |
| Deovulc BG 187 (Beschleunigergemisch) | 5 | 5 | 5 | 5 | 5 | 5 | 5 | 5 |
| Stearinsäure | 1 | 1 | 1 | 1 | 1 | 1 | 1 | 1 |
| Kieselsäure/Kaolinit-Gemisch mit d₅₀ <2,4 µm | 15 | 15 | 15 | 15 | 15 | 15 | 15 | 15 |

| Mischungs-nummer | 1.0 | 1.1 | 1.2 | 1.3 | 1.4 | 1.5 | 1.6 | 1.7 |
|---|---|---|---|---|---|---|---|---|
| Härte, Shore A | 56 | 52 | 55 | 58 | 60 | 63 | 72 | 80 |

| Brandtest 1 | Brennertest | | | | | | | |
|---|---|---|---|---|---|---|---|---|
| Verlöschun gszeit, s | 50-100 | >100 | > 100 | 50 -100 | 40 | < 6 | <5 | <3 |
| Bewertung | schwach nachbrenn end | mäßig nachbrenn end | mäßig nachbrenn end | schwach nachbrenn end | selbstverlö schend | selbstverlö schend | selbstverlö schend | selbstverlö schend |

| Brandtest 2 | EN 45545-2, R9 | | | | | | | |
|---|---|---|---|---|---|---|---|---|
| Rauchgas dichte (ISO 5669-2): Dₛmax | 105 | 90 | 85 | 71 | 58 | 57 | <60 | <60 |
| Rauchgast oxizität (ISO 5669-2): CIT_{G} | 0,04 | 0,02 | 0,02 | 0,02 | 0,02 | 0,02 | 0,018 | 0,015 |
| Wärmefrei setzungsra te (ISO 5660-1) : MARHE (kW/m²) | >90 | 80 | 77 | 65 | 58 | 57 | 54 | 50 |
| | nicht erfüllt | R9/HL2 | R9/HL2 | R9/HL2 | R9/HL3 | R9/HL3 | R9/HL3 | R9/HL3 |

| Mischungsnummer | 1.0 | 1.1 | 1.2 | 1.3 | 1.4 | 1.5 | 1.6 | 1.7 |
|---|---|---|---|---|---|---|---|---|
| Härte, Shore A | 56 | 53 | 55 | 56 | 60 | 63 | 72 | 80 |
| Dichte, g/cm³ | 1,42 | 1,22 | 1,22 | 1,23 | 1,24 | 1,25 | 1,27 | 1,29 |
| Elastizität, % | 39 | 53 | 53 | 53 | 49 | 46 | 42 | 36 |
| Kerbzähigkeit, N/mm | 6,2 | 7,2 | 7,3 | 7,6 | 8,4 | 9,8 | 12,8 | 14,1 |
| Zugfestigkeit, MPa | 4,7 | 6,9 | 7,2 | 7,3 | 7,5 | 7,8 | 7,9 | 8,1 |
| Bruchdehnung, % | 481 | 510 | 500 | 480 | 420 | 390 | 340 | 310 |
| Abrieb, mm³ | 620 | 290 | 294 | 297 | 291 | 285 | 270 | 261 |

| | | | | | | | | |
|---|---|---|---|---|---|---|---|---|
| Erkennbar ist hier u.a., dass erst bei weniger als 50 phr Mineralöl, die Normen für den Brandschutz erfüllt sind und gleichzeitig die mechanischen und dynamischen Werte vorteilhaft sind. | | | | | | | | |

### Beispiel 2:

**EPDM-Mischung ohne Vinylacetat-haltiges Polymer**

| | |
|---|---|
| Härte: | 80 Shore A |
| Vernetzung: | Peroxid |
| Referenz: | Mischung 2.1 nicht flammgeschützt |

**Rezeptangaben in phr**

| Mischung | 2.1 | 2.2 | 2.3 | 2.4 |
|---|---|---|---|---|
| EPDM (Ethylenanteil: 48 Gew-%, ENB: 7,8 Gew-%) | 100 | 100 | 100 | 100 |
| Ruß N 550 | 60 | 60 | 60 | 50 |
| Paraffinisches Mineralöl mit C_{aromatisch} :2% | 0 | 20 | 10 | 0 |
| Al(OH)₃ mit d₅₀=1 µm | 0 | 100 | 100 | 50 |
| Di-(2-tert.-butyl-peroxyisopropyl)-benzen | 6 | 6 | 6 | 6 |
| Trimethylolpropane-trimethacrylate | 1 | 1 | 1 | 1 |
| Kieselsäure/Kaolinit-Gemisch mit d₅₀ <2,4 µm | 10 | 20 | 20 | 10 |
| Brandtest 1 | Brennertest | | | |
| Verlöschungszeit, s | >100 | 50 -100 | 15 | <3 |
| Bewertung | nicht selbstverlöschend, brennt zunehmend | schwach nachbrennend | selbstverlöschend | selbstverlöschend |
| Härte, Shore A | 80 | 75 | 81 | 80 |
| Dichte, g/cm³ | 1,10 | 1,34 | 1,36 | 1,25 |
| Elastizität, % | 56 | 45 | 52 | 48 |
| Kerbzähigkeit, N/mm | 12 | 10 | 10,2 | 10,5 |
| Zugfestigkeit, N/mm² | 12,7 | 8,1 | 9,4 | 10,4 |
| Bruchdehnung, % | 155 | 217 | 167 | 190 |

### Beispiel 3:

**EPDM-Mischung mit Vinylacetat-haltigem Polymer**

| | |
|---|---|
| Vernetzung: | Peroxid |
| Härte: | 75-80 Shore A |

**Rezeptangaben in phr**

| Mischung | 3.1 | 3.2 | 3.3 |
|---|---|---|---|
| EPDM (Ethylenanteil; 52 Gew-%, ENB: 7,5 Gew-%) | 90 | 90 | 80 |
| EVA mit 60 Gew-% VAC | 10 | 10 | 20 |
| Ruß N 550 | 50 | 50 | 50 |
| Paraffinisches Mineralöl mit C_{aromatisch} :2% | 20 | 10 | 10 |
| Mg(OH)₂, d₅₀= 0,9 µm | 110 | 90 | 90 |
| Zinkborat d₅₀= 2,1 µm | 10 | 10 | 10 |
| Di-(2-tert.-butyl-peroxyisopropyl)-benzen | 7 | 7 | 7 |
| Trimethylolpropane -trimethacrylate | 1 | 1 | 1 |
| Kieselsäure/Kaolinit-Gemisch mit d₅₀ <2,4 µm | 15 | 15 | 15 |
| Brandtest 1 | Brennertest | | |
| Verlöschungszeit, s | 15 | 10 | spontan |
| Bewertung | selbstverlöschend | selbstverlöschend | selbstverlöschend |
| Härte, Shore A | 77 | 78 | 78 |
| Dichte, g/cm³ | 1,32 | 1,31 | 1,31 |
| Elastizität, % | 47 | 46 | 42 |
| Kerbzähigkeit, N/mm | 10,1 | 12,2 | 11,8 |
| Zugfestigkeit, N/mm² | 9,3 | 9,5 | 9,6 |
| Bruchdehnung, % | 189 | 205 | 210 |

In Beispiel 2 und 3 sind die Effekte der Mineralöl- und der Flammschutzmittelgehalte erkennbar.

### Beispiel 4:

**EPDM mit Butylkautschuk (IIR) (Elastomer des R-Typs)**

| | |
|---|---|
| Härte: | 46 Shore A |
| Vernetzung: | Schwefel |

**Rezeptangaben in phr**

| Mischungsnummer | 4.0 |
|---|---|
| Härte, Shore A | 46 |
| EPDM (Ethylen: 55 Gew-%, ENB: 6,5 Gew-%) | 70 |
| IIR (ML 1+8, 125°C:51, Ungesättigtheit: 1,7 mol% | 30 |
| Paraffinisches Mineralöl mit C_{aromatisch} :2% | 30 |
| Ruß N 550 | 10 |
| Al(OH)₃ mit d₅₀=1 µm | 80 |
| Kieselsäure/Kaolinit-Gemisch mit d₅₀ <2,4 µm | 10 |
| Zinkoxid, BET = 4,5m²/g | 5 |
| Stearinsäure | 1 |
| Deovulc BG 187 (Beschleunigergemisch) | 6 |
| Mahlschwefel | 2,0 |
| | |
| Brandtest 1 | Brennertest |
| Verlöschungszeit, s | 50 -100 |
| Bewertung | Schwach nachbrennend |

| Mischung | 4 |
|---|---|
| Härte, Shore A | 46 |
| Dichte, g/cm³ | 1,22 |
| Zugfestigkeit, N/mm² | 9,6 |
| Bruchdehnung, % | 760 |

Der Brennertest wurde mit folgendem Aufbau realisiert:
Der Abstand vom Bunsenbrenner zu Probe beträgt 140 mm. Der Probekörper weist einen Durchmesser von 42 mm bei einer Dicke von 6 mm auf. Es wird für 45 Sekunden beflammt. Danach wird die Beflammung beendet, das Nachbrennverhalten beobachtet und die Zeit bis zur Selbstverlöschung gemessen.

Die Brandtests nach EN 45545-2 wurden entsprechend der hinterlegten Normen ausgeführt.

Die Herstellung der beispielhaften Beispielrezepturen erfolgte alternativ auf einem Walzwerk oder in einem Innenmischer:
Arbeitet man auf Walzwerken, erfolgt der Ablauf in folgender Reihenfolge:
EPM/EPDM und gegebenenfalls EVA werden miteinander gemischt bis sich ein glattes Walzfell gebildet hat. Dabei wird ohne Walzenkühlung gearbeitet. Um die Homogenität sicherzustellen, wird vor Zugabe der Zuschlagstoffe das Mischungsfell abwechselnd dreimal von links und rechts bis zu etwa 3/4 der Walzenbreite im Winkel von etwa 45° eingeschnitten und die so abgenommene Mischung wieder auf der anderen Seite aufgegeben, im folgenden 3x links und rechts Einschneiden genannt. Vor Beginn des Einmischprozesses der anderen Mischungsbestandteile wird die Wasserkühlung der Walzen eingeschaltet. Die Zugabe der festen und flüssigen Zuschlagstoffe erfolgt fortlaufend in kleinen Mengen und permanenter Spaltverstellung. Hat der Kautschuk alle Stoffe aufgenommen, wird wiederum durch dreimaliges Einschneiden links und rechts homogenisiert. Das Walzfell wird von der Walze genommen und bei Raumtemperatur 10 Minuten zwischengelagert, um eine Kühlung der Mischung und der Walzen zu erreichen. Die Zugabe der Beschleuniger erfolgt gemeinsam mit dem Schwefel. Hat die Mischung den Beschleuniger und Schwefel aufgenommen, wird die Mischung wieder dreimal links und rechts eingeschnitten. Anschließend wird die Mischung komplett von der Walze genommen und sechs Mal gestürzt. Abwechselnd wird das Walzfell in und quer zur Walzrichtung aufgegeben. Danach erfolgt das Abnehmen des Walzfelles in gewünschter Felldicke.

Arbeitet man mit einem Innenmischer, erfolgt der Ablauf in folgender Reihenfolge:
Die Mischkammer wird vor dem Beginn des Mischvorganges auf 50°C +/- 5°C temperiert. Zuerst werden EPM/EPDM und gegebenenfalls EVA eingefüllt und 120 Sekunden bei gesenktem Stempel geknetet. Danach erfolgt die Zugabe der festen und flüssigen Zuschlagstoffe. Der Stempel wird gesenkt und es wird wiederum 120 Sekunden geknetet. Anschließend wird der Stempel gereinigt und die Mischung nochmals maximal 60 Sekunden oder bis zum Erreichen einer Massetemperatur von 100°C in der Mischkammer gemischt und anschließend ausgeworfen. Die Mischungskühlung und Homogenisierung erfolgt am nachgeschalteten Walzwerk mittels Stockblender. Die Kühlwassertemperatur am Einlauf beträgt max. 30 °C. Hat die Mischung eine Temperatur von etwa 80°C +/- 5°C erreicht, wird der Beschleuniger zugegeben. Nach nochmaligem Homogenisieren mittels Stockblender (5 Zyklen) wird das Mischungsfell von der Walze genommen und auf Transportwagen bis zur Weiterverarbeitung gelagert.

Die Beispielrezepturen wurden in einem Innenmischer des Typs LH 50 A (Baujahr 1961) nach obigem Verfahren mit einer Drehzahl der tangierenden Schaufeln von 30 U/min gefertigt. Nach dem Auswerfen der Mischung bei 100°C wurde die Mischung auf einem Walzwerk (Berstorff 1500 mm), wie oben beschrieben, gekühlt und die Beschleuniger eingemischt. Es wurden Mischungsfelle mit einer Dicke von 4 mm von der Walze genommen und auf einem Transportwagen bis zur Weiterverarbeitung gelagert.

Die Vulkanisation der Mischungen von Beispiel 1 erfolgte in einer elektrischen Presse bei 160°C, 30 min und einem Druck von 200 bar, jedenfalls aber nach erfolgter Formgebung und unter Vermeidung jeglicher Scherbeanspruchung, die Vulkanisation der Mischungen der Beispiele 2 und 3 erfolgte bei 180°C, 10 min unter ansonsten gleichen Bedingungen. Alternativ kann die Vulkanisation auch drucklos bzw. bei Normaldruck, jedenfalls aber bei erhöhter Temperatur erfolgen z.B. bei kontinuierlicher Vulkanisation im Salzbad für Profile.

Die so erhaltene Zusammensetzung kann somit einer Formgebung unterzogen und danach vulkanisiert werden, und in dieser Form ohne weiteren Bearbeitungsschritt als flammgeschützter Artikel, beispielsweise als Profil, direkt verwendet werden. Alternativ kann die so erhaltene Zusammensetzung aber auch zu einem Verbundelement weiterverarbeitet werden und erst dann zum fertigen Endprodukt vulkanisiert werden.

## Patentansprüche

1. Flammgeschützte, vulkanisierte polymere Zusammensetzung enthaltend als polymere Komponente zumindest ein halogenfreies olefinisches Elastomer der M-Gruppe mit gesättigter Hauptkette mit einem Anteil von mehr als 50 phr bezogen auf die polymeren Bestandteile, **dadurch gekennzeichnet, dass** zumindest ein oder eine Kombination von verschiedenen halogenfreien wasserabspaltenden Flammschutzmitteln mit einem Anteil von insgesamt 30 bis 130 phr enthalten ist, und dass der Anteil an Mineralöl-Weichmachern in der Zusammensetzung kleiner gleich 50 phr ist.

2. Zusammensetzung nach Anspruch 1, **dadurch gekennzeichnet, dass** Mineralöl-Weichmacher mit einem maximalen Anteil von kleiner gleich 20 phr, vorzugsweise kleiner gleich 10 phr, enthalten ist und/oder dass die Zusammensetzung frei von Mineralöl-Weichmacher ist,
und/oder
dass das halogenfreie olefinische Elastomer mit einem Anteil von größer gleich 70 phr enthalten ist oder mit einem Anteil von 100 phr als einzige polymere Komponente enthalten ist,
und/oder
dass der Anteil der wasserabspaltenden Flammschutzmittel im Bereich von 50 bis 110 phr, vorzugsweise von 60 bis 100 phr, liegt,
und/oder
dass als Flammschutzmittel wasserabspaltende Metallhydrate, vorzugsweise Magnesiumhydroxid (MDH), Aluminiumhydroxid (ATH) und/oder Zinkborat, vorzugsweise eine Mischung davon, enthalten sind und/oder dass die Flammschutzmittel fest und pulverförmig oder kristallin sind.

3. Zusammensetzung nach einem der vorangehenden Ansprüche, **dadurch gekennzeichnet, dass** das olefinische Elastomer ein Homopolymer oder ein Copolymer oder ein Terpolymer aus bzw. mit Dien-Monomereinheiten ist, insbesondere ein Terpolymer bestehend aus Ethylen, Propylen und einem dienhaltigen Termonomer, vorzugsweise mit einem Termonomer-Anteil von mindestens 0 Gew.-% bis 12 Gew.-% bezogen auf das olefinische Elastomer,
und/oder
dass das olefinische Elastomer ausgewählt ist aus der Gruppe bestehend aus Ethylen-Propylen-Dien-Kautschuk (EPDM) und Ethylen-Propylen-Kautschuk (EPM) und/oder dass die Zusammensetzung aus Ethylen-Propylen-Dien-Kautschuk (EPDM) und/oder Ethylen-Propylen-Kautschuk (EPM) als einzigen polymeren Komponenten besteht,
und/oder
Zusammensetzung nach einem der vorangehenden Ansprüche, **dadurch gekennzeichnet, dass** das olefinische Elastomer ein Kautschuk mit einer ungesättigten Seitengruppe, insbesondere ein Ethylen-Propylen-Dien-Kautschuk (EPDM) ist, der vorzugsweise nicht-konjugierte, Dien-Monomereinheiten aufweist, ausgewählt aus der Gruppe von 1,3-Butadien, 2-Methyl-1,3-butadien (Isopren), 2,3-Dimethyl-1,3-butadien, 1,3-Pentadien, 1,3-Cyclopentadien, Dicyclopentadien, 2-Methyl-1,3-pentadien, 1,3-Hexadien, 1,4-Hexadien, 1,4-Cyclohexadien, Tetrahydroinden, Methyl Tetrahydroinden, Ethylidennorbornen bzw. 5-Ethyliden-2-norbornen (ENB), 5-Methylen-2-norbornen (MNB), 1,6 Octadien, 5-Methyl-1,4-hexadien, 3,7-dimethyl-1,6-octadien, 5-iso-Propyliden-2-norbornen, 5-Vinyl-2-norbornen (VNB), wobei der Ethylen-Propylen-Dien-Kautschuk (EPDM) vorzugsweise ein Terpolymer aus Ethylen, Propylen und 5-Ethyliden-2-norbornen (ENB) oder Dicyclopentadien (DCPD) ist.

4. Zusammensetzung nach einem der vorangehenden Ansprüche, **dadurch gekennzeichnet, dass** zumindest eine weitere polymere Komponente enthalten ist, insbesondere ein Elastomer der R-Gruppe oder der Q-Gruppe (Silikon) oder ein thermoplastisches Polymer, wobei die polymeren Komponenten der Zusammensetzung insbesondere als homogene Polymermischung bzw. Blend vorliegen,
und/oder
dass als weitere polymere Komponente ein Vinylacetat-haltiges thermoplastisches Polymer enthalten ist, insbesondere ein Homopolymer, Copolymer oder Terpolymer des Vinylacetats und vorzugsweise ausgewählt aus der Gruppe von Polyvinylacetat (PVAc) oder Ethylenvinylacetat (EVA),
und/oder
dass das Vinylacetat-haltige Polymer eine Schmelztemperatur bzw. einen Beginn des Schmelzbereichs von weniger als 150 °C, vorzugsweise weniger als 100 °C, aufweist und/oder dass das Vinylacetat-haltige Polymer einen Vinylacetat-Anteil von 40 bis 75 Gew.-%, aufweist und/oder dass das, gegebenenfalls unvernetzte, Vinylacetat-haltige Polymer in einem Anteil von 0 bis 50 phr enthalten ist.

5. Zusammensetzung nach einem der vorangehenden Ansprüche, bestehend aus den folgenden polymeren Komponenten:
- Ethylen-Propylen-Dien-Kautschuk (EPDM) oder
- Ethylen-Propylen-Kautschuk (EPM) oder
- Ethylen-Propylen-Dien-Kautschuk (EPDM) und Ethylenvinylacetat (EVA) als homogene Polymermischung, oder
- Ethylen-Propylen-Kautschuk (EPM) und Ethylenvinylacetat (EVA) als homogene Polymermischung, oder
- Ethylen-Propylen-Dien-Kautschuk (EPDM) und Polyvinylacetat (PVAc) als homogene Polymermischung, oder
- Ethylen-Propylen-Kautschuk (EPM) und Polyvinylacetat (PVAc) als homogene Polymermischung.

6. Zusammensetzung nach einem der vorangehenden Ansprüche, **dadurch gekennzeichnet, dass** eine durch ein, insbesondere peroxidisches oder Schwefel- bzw. schwefelhaltiges, Vernetzungssystem vulkanisierte Matrix bzw. Mischungsmatrix ausgebildet ist, wobei sich das Vernetzungssystem über die gesamte Matrix erstreckt und diese vollständig durchsetzt,
und/oder
dass die Polymermischung als interpenetrierendes Gemenge aus den Ketten des Vinylacetat-haltigen Polymers sowie den, beispielsweise schwefelvernetzten, Elastomerketten ausgebildet ist und/oder dass die polymeren Komponenten als chemisch weitmaschig vernetzte Raumnetzmoleküle vorliegen,
und/oder
dass die polymere Komponente bzw. die polymeren Komponenten der Zusammensetzung einphasig und homogen, insbesondere ohne makroskopisch und lichtmikroskopisch sichtbare Phasentrennung, ist/sind und/oder dass die polymeren Komponenten miteinander als im Wesentlichen einphasige und homogene Mischung, insbesondere ohne makroskopisch und lichtmikroskopisch sichtbare Phasentrennung, vorliegen und/oder dass die Zusammensetzung, die polymere Komponente oder die Polymermischung frei von dispergierten vulkanisierten Elastomer-Partikeln, insbesondere frei von Elastomer-Partikeln oder Kautschuk-Domänen mit einem mittleren Durchmesser von mehr als 0,5 µm, insbesondere von mehr als 0,1 µm, vorzugsweise von mehr als 0,01 µm, ist.

7. Zusammensetzung nach einem der vorangehenden Ansprüche, **dadurch gekennzeichnet, dass** die Zusammensetzung sowohl im Temperaturbereich der Anwendung als auch im Bereich erhöhter Temperatur, insbesondere kurzfristig auch bei 150 bis 200 °C, elastomere Eigenschaften besitzt bzw. ausschließlich elastomere und keine thermoplastischen Eigenschaften aufweist und die thermoplastischen Eigenschaften in den Hintergrund treten oder überhaupt nicht vorhanden sind bzw. dass die Zusammensetzung nicht als thermoplastisches Elastomer (TPE), insbesondere nicht als thermoplastisches Elastomer auf Olefinbasis (TPE-O) oder als vernetztes thermoplastisches Elastomer auf Olefinbasis (TPE-V) ausgebildet ist,
und/oder
dass die Zusammensetzung im Temperaturbereich bis 200 °C keinen Schmelzpeak, gemessen mit dynamischer Differenzkalorimetrie, aufweist,
und/oder
dass die Zusammensetzung in einem Temperaturbereich von Raumtemperatur bis ca. 200°C einen Verlustfaktor (Verhältnis von Verlust- zu Speichermodul bei dynamischer Scherbeanspruchung) von tan δ < 0,3 aufweist.

8. Zusammensetzung nach einem der vorangehenden Ansprüche, hergestellt bzw. erhältlich durch Vorlegen der polymeren Komponente oder durch Mischen der polymeren Komponenten zu einem homogenen Blend und, insbesondere nachfolgender, Einarbeitung der Vernetzungsmittel, der Flammschutzmittel und weiterer Additive und/oder Hilfsstoffe unter Vermeidung einer Vernetzung und/oder Vulkanisation, vorzugsweise bei einer Temperatur von maximal 110 °C, danach Formgebung und Vulkanisation, insbesondere bei erhöhter Temperatur und gegebenenfalls unter Druck, wobei die Vulkanisation nicht unter Scherungsbeanspruchung erfolgt,
und/oder
Zusammensetzung nach einem der vorangehenden Ansprüche, erhältlich durch statische Vulkanisation unter Vermeidung von Scherbeanspruchung bzw. unter Vermeidung von dynamischer Vulkanisation, insbesondere nach erfolgter Formgebung.

9. Zusammensetzung nach einem der vorangehenden Ansprüche, **dadurch gekennzeichnet, dass** die polymeren Komponenten, insbesondere die gesamte Zusammensetzung, halogenfrei sind/ist,
und/oder
Zusammensetzung nach einem der vorangehenden Ansprüche mit folgender Zusammensetzung:
- Ethylen-Propylen-Dien-Kautschuk (EPDM) oder Ethylen-Propylen-Kautschuk (EPM): 70 - 100 phr,
- Vinylacetat-haltiges Polymer, insbesondere Ethylenvinylacetat (EVA): 0 - 30 phr,
- Mineralöl-Weichmacher: 0 - 10 phr,
- Flammschutzmittel, insbesondere Aluminiumhydroxid (ATH): 60 bis 100 phr,
- Ruß: 0 - 80 phr,
- Rest Hilfsstoffe, Additive etc.,
und/oder
Zusammensetzung nach einem der vorangehenden Ansprüche, **dadurch gekennzeichnet, dass** sie eine Härte von 40 bis 90 Shore A, vorzugsweise 55 bis 85, Shore A und/oder eine Zugfestigkeit > 5 MPa, vorzugsweise > 7 MPa, und/oder einen Abrieb < 400 mm³, vorzugsweise < 300 mm³, und/oder eine Dichte < 1,4 g/cm³, vorzugsweise < 1,3 g/cm³, und/oder einen MARHE-Wert (ISO 5660-1) < 90 kW/m², insbesondere < 60 kW/m², aufweist und die Norm EN 45545-2 erfüllt.

10. Verfahren zur Herstellung einer Zusammensetzung gemäß einem der vorangehenden Ansprüche, indem
- zuerst die polymere(n) Komponente(n), das/die Vernetzungsmittel, das/die Flammschutzmittel und gegebenenfalls weitere Additive und Hilfsstoffe unter Vermeidung einer Vernetzung und/oder Vulkanisation zu einem homogenen Blend gemischt werden,
- dann ein Schritt der Formgebung erfolgt,
- und dann, frühestens während oder am Ende der Formgebung, insbesondere nach abgeschlossener Formgebung, die Vulkanisation als statische, nicht-dynamische Vulkanisation unter Vermeidung von Scherspannung durchgeführt wird.

11. Verfahren nach Anspruch 10, **dadurch gekennzeichnet, dass** die Erstellung der Mischung vor der Formgebung bei einer für die vorzeitige Vulkanisation unkritischen Temperatur und Zeit insbesondere bei einer Temperatur von maximal 125 °C, vorzugsweise im Bereich von 50 °C bis maximal 110 °C, durchgeführt wird und/oder dass der Blend bzw. die polymere(n) Komponente(n) während der Mischung in einem erweichten Zustand vorliegen,
und/oder
dass die Formgebung bei einer für die vorzeitige Vulkanisation unkritischen Temperatur und Zeit durchgeführt wird, insbesondere bei einer Temperatur von maximal 130 °C, insbesondere im Bereich von 70 °C bis 100 °C, erfolgt,
und/oder
dass die Vulkanisation bei einer Temperatur von maximal 240 °C, insbesondere im Bereich von 160 °C bis 180 °C, erfolgt, vorzugsweise bei einer im Vergleich zur Mischung und/oder Formgebung höheren Temperatur, insbesondere bei einem Druck von 100 bis 200 bar, erfolgt.

12. Zusammensetzung, insbesondere nach einem der Ansprüche 1 bis 9, erhältlich durch ein Verfahren nach einem der Ansprüche 10 bis 11.

13. Flammgeschützter Artikel, umfassend die oder bestehend aus der Zusammensetzung nach einem der vorangehenden Ansprüche.

14. Elastisches flammgeschütztes Verbundelement, geeignet zur Schwingungsdämpfung und Federung, mit einem Grundkörper, insbesondere aus Kautschuk, der zumindest teilweise oder abschnittsweise, an seiner äußeren Oberfläche, gegebenenfalls an seiner gesamten äußeren Oberfläche, mit zumindest einer Beschichtung, aus der Zusammensetzung gemäß einem der vorangehenden Ansprüche versehen ist.

15. Verwendung der Zusammensetzung, des Artikels oder des Verbundelements gemäß einem der vorangehenden Ansprüche als Federelement, Dämpfungselement, Dichtung, Schlauch, Matte, Formteil, Schutzbekleidung, als Elastomerprofil, insbesondere für Fenster etc. oder als Bestandteil hiervon.
